Europäisches Patentamt

European Patent Office

Office européen des brevets

(19)

(11) Veröffentlichungsnummer: **0 279 286**
**B1**

(12) **EUROPÄISCHE PATENTSCHRIFT**

(45) Veröffentlichungstag der Patentschrift: **06.02.91**

(51) Int. Cl.⁵: **C 03 B 37/06**

(21) Anmeldenummer: **88101591.1**

(22) Anmeldetag: **04.02.88**

(54) **Verfahren und Vorrichtung zur Herstellung feinster mineralfasern, insbesondere Glasfasern.**

(30) Priorität: **14.02.87 DE 3704692**

(43) Veröffentlichungstag der Anmeldung:
**24.08.88 Patentblatt 88/34**

(45) Bekanntmachung des Hinweises auf die
Patenterteilung:
**06.02.91 Patentblatt 91/06**

(84) Benannte Vertragsstaaten:
**BE CH DE FR GB LI**

(56) Entgegenhaltungen:
**EP-A-0 038 989**
**EP-A-0 200 071**
**BE-A- 620 050**

(73) Patentinhaber: **BAYER AG**
**D-5090 Leverkusen 1 Bayerwerk (DE)**

(72) Erfinder: **Wagner, Wolfram, Dr.**
**Zeisigstrasse 9**
**D-4047 Dormagen 1 (DE)**
Erfinder: **Nyssen, Roger, Dipl.-Ing.**
**Magnolienstrasse 6**
**D-4047 Dormagen 11 (DE)**
Erfinder: **Berkenhaus, Dirk**
**Urftstrasse 31**
**D-5000 Köln 50 (DE)**
Erfinder: **VAN Pey, Hans-Theo**
**Am Puetzbach 11**
**D-5152 Bedburg/Lipp. (DE)**

**Beschreibung**

Die Erfindung betrifft ein Verfahren zur Herstellung von Mineralfasern, insbesondere Glasfasern mit einem Durchmesser von 0,1—5 µm, vorzugsweise von 0,1 µm bis 2 µm, nach dem Düsenblasverfahren, bei dem aus Öffnungen im Boden eines Schmelzetiegels Schmelzeströme austreten, die in einer nachgeschalteten Ziehdüse durch ein im wesentlichen parallel zu den Schmelzeströmen strömendes Blasmedium zerfasert werden, wobei das Blasmedium durch ein zwischen Düseneinlaß und -auslaß erzeugtes Druckgefälle in die Ziehdüse eingesaugt wird und die Strömungsgeschwindigkeit in einem nachgeschalteten Diffusor reduziert wird.

Ein derartiges Verfahren ist zum Beispiel in EP 38 989 beschrieben. Wieterhin werden in EP 200 071 verschiedene Maßnahmen zur Modifizierung des Düsenblasverfahrens beschrieben, die auf die Herstellung von Glasfasern mit einem minimalen Durchmesser abzielen.

Es hat sich nun gezeigt, daß man mit Hilfe solcher oder ähnlicher Maßnahmen den Faserdurchmesser nicht beliebig verkleinern kann. Insbesondere sind der Verkleinerung der Austrittsöffnungen am Schmelzetiegel aus wirtschaftlichen Gründen Grenzen gesetzt, da die Verkleinerung der Austrittsöffnungen mit einer Abnahme des gesamten, durch die Ziehdüse geförderten Massenstromes und daher mit einer Verringerung der Ausbeute einhergeht. Außerdem ist man bestrebt, als Ausgangsmaterial Gläser mit relativ hoher Viskosität, z.B. E-Glas, zu verwenden und daraus möglichst wirtschaftlich Fasern mit kleinstmöglichem mittlerem Durchmesser herzustellen, wobei der Anteil von nichtfasrigen Bestandteilen, d.h. von sogenannten Faserfehlstellen wie z.B. Perlen, Verdickungen, Knoten, Büschel etc., möglichst gering sein soll.

Diese Aufgabe wird, ausgehend von dem eingangs beschriebenen Verfahren, erfindungsgemäß dadurch gelöst, daß als Blasmedium zwischen Tiegelunterseite und Zeihdüsenoberkante von gegenüberliegenden Breitseiten des Schmelzetiegels ein aus Flammengasen und homogen zugemischter Luft bestehendes Heißgas mit einer Temperatur von 600°C bis 1500°C, vorzugsweise 800°C bis 1400°C, im Überschuß zu dem gesamten, am Ziehdüseneinlauf angesaugten Gasmengenstrom zugeführt wird und die Strömungsgeschwindigkeit des Heißgases im Bereich zwischen der Ziehdüse und dem Schmelzetiegelboden auf einen Wert <100 m/sec, vorzugsweise <50 m/sec, eingestellt wird. Der Heißgasüberschuß soll dabei zwischen 1 und 20%, vorzugsweise zwischen 1 und 10%, des gesamten von der Ziehdüse eingesaugten Heißgasmengenstromes betragen. Dies bedeutet, daß mindestens 80% des erzeugten Heißgasmassenstromes durch die Ziehdüse gefördert wird, während die Restmenge am Ziehdüseneinlauf seitlich abströmt.

Die erfindungsgemäße Heißgaszuführung verhindert eine Abkühlung des Schmelzeverteilers im Bereich der Austrittsöffnungen und kann außerdem zur Beheizung eines Teils des Schmelzeverteilers mit herangezogen werden. Die saubere Heißgasatmosphäre zwischen Zeihdüseneinlauf und Tiegelunterseite verhindert auch, daß Schmutzpartikel miteingesaugt werden. Ferner hat sich herausgestellt, daß der abrasive Verschleiß des Platinschmelzeverteilers aufgrund der niedrigen Gasdichte des Heißgasstromes verringert wird, so daß auch bei hohen Temperaturen des Schmelzeverteilers (ca. 1500°C) eine lange Lebensdauer des Schmelzetiegels gewährleistet ist.

Die erfindungsgemäße Heißgaszuführung ermöglicht ferner eine Weiterbildung des Verfahrens, wonach die Temperatur des Heißgases am Ziehdüseneinlauf gemessen wird und durch Nachstellung der Brenngas- und/oder Luftzufuhr selbsttätig geregelt wird. Auf diese Weise wird das Blasmedium mit konstanter Temperatur zugeführt.

Die Vorrichtung zur Durchführung des erfindungsgemäßen Verfahrens geht aus von einem Schmelzetiegel mit Austrittsöffnungen, einer darunter angeordneten Ziehdüse, in der die aus dem Tiegel austretenden Primärschmelzefäden unter der Wirkung eines Heißgases zerfasert und ausgezogen werden und Gasbrennern zur Erzeugung des Heißgases im Bereich zwischen der Ziehdüse und dem Schmelzetiegelboden. Erfindungsgemäß sind die Gasbrenner mit ihren Brennräumen seitlich zwischen dem Schmelzetiegel und der Ziehdüsenoberkante angeordnet und die Brennräume über Bohrungen mit Luftkammern verbunden, die unter einem Vordruck von 1,1 bis 2,0 bar (absolut) stehen. Die Gasbrenner schließen sich also mit ihren Brennräumen, abgesehen von relativ kleinen Spalten, die aus Toleranzgründen erforderlich sind, seitlich an die Schmelzetiegel bzw. Ziehdüsenoberfläche an, so daß der Zwischenraum zwischen Tiegelunterseite und Ziehdüsenoberkante einschließlich der Brennräume ein quasi abgeschlossenes System bildet.

Vorzugsweise besitzen die als Mischräume für eine homogene Durchmischung der durch die Bohrungen eingespeisten Luft mit den Flammengasen ausgebildeten Brennräume eine Länge von 100 bis 500 mm, insbesondere 200 bis 400 mm.

Die oben erwähnten Strömungsgeschwindigkeiten des Heißgases, die <100 m/s sein sollen, beziehen sich dann auf den Austrittsquerschnitt der Mischräume.

Weitere Verbesserungen und spezielle Ausführungsformen der Erfindung sind in den Unteransprüchen beschrieben.

Neben den bereits beschrieben Vorteilen werden mit der Erfindung noch folgende vorteilhafte Wirkungen und Ergebnisse erzielt:

1. Aufgrund des Heißgasüberschusses am Ziehdüseneinlauf kann keine Kaltluft von außen angesaugt werden. Daraus resultiert eine hohe Temperaturkonstanz im kritischen Bereich der Einlaufströmung. Temperaturgradienten quer zur Ziehdüsenachse können vermieden werden. Diese Bedingung ist auch dann erfüllt, wenn die Anströmgeschwindigkeit des Heißgases bzw. die Austrittsgeschwindigkeit des Heißgases aus den Brennräumen verhältnismäßig gering ist. Es kann mit Heißgasströmungsgeschwindigkeiten von weniger als 50 m/s am Austritt der Brennräume gearbeitet werden. In diesem Sinne wirken sich auch die langen Brenn- bzw. Mischräume zwischen dem Ziehdüseneintritt und den Brennern günstig aus.

2. Da die maximal erreichbare Geschwindigkeit der Saugluft im Ziehdüseneinlauf gleich der Schallgeschwindigkeit ist und andererseits die Schallgeschwindigkeit mit ansteigender Temepratur zunimmt, können höhere Grenzgeschwindigkeiten und damit höhere Ausziehgeschwindigkeiten in der Ziehdüse erreicht werden. Gleichzeitig wird dadurch die Abkühlungsgeschwindigkeit der primären Schmelzeströme in der Ziehdüse verringert. Diese beiden Effekte sind im Hinblick auf die Erzeugung von feinsten Glasfasern von großer Bedeutung.

3. In wirtschaftlicher Hinsicht ergibt sich eine Verbesserung des Wirkungsgrades, da bei den hohen Temperaturen des Heißgases und der dadurch möglichen Reduzierung des gesamten, durch die Ziehdüse gesaugten Massenstromes eine geringere Beschleunigungsarbeit von den Treibstrahlen aufgebracht werden muß. Verfahren nach dem Stand der Technik, bei denen in ähnlicher Weise heiße Gasströme zum Ausziehen der Fasern angewandt werden, erfordern eine höhere kinetische Energie und/oder höhere Temperaturen und damit auch einen höheren Heißgasverbrauch pro Kilogramm Fasern im Vergleich zu dem erfindungsgemäßen Verfahren.

4. Die oben angesprochene Verlängerung der Ausziehstrecke aufgrund der hohen Temperaturen des Heißgases führt auch zu einem höheren Qualitätsstandard des Fasermasterials. Der Anteil von nicht zerfasertem Material (z.B. Perlen, Dickstellen, Büschel etc.) konnte deutlich reduziert werden.

5. Ferner hat sich herausgestellt, daß die hohe Temperatur des Blasmediums in Verbindung mit der verlängerten Ausziehstrecke auch die Herstellung von feinsten Glasfasern aus höherviskosen Schmelzen erlaubt. Mit den bekannten Blasdüsenverfahren konnten bisher nur relativ grobe Fasern mit einem einheitlichen Durchmesser (geringe Durchmesserstreuung) hergestellt werden.

Im folgenden werden Ausführungsbeispiele der Erfindung anhand von Zeichnungen näher erläutert. Es ziegen:

Fig. 1 die Heißgaszuführung am Ziehdüseneinlauf,

Fig. 2 einen Brenner mit anschließendem Mischraum zur Erzeugung des Heißgases,

Fig. 3 eine Vorrichtung zur Heißgaserzeugung mit vertikal und parallel zum Schmelzetiegel angeordneten Brennern,

Fig. 4 bis 5 eine Brenn- bzw. Mischkammer mit tangentialer Luftzuführung und

Fig. 6 eine Heißgaszuführung mit seitlich angeordneten Brenn- bzw. Mischräumen und tangentialer Luftzuführung.

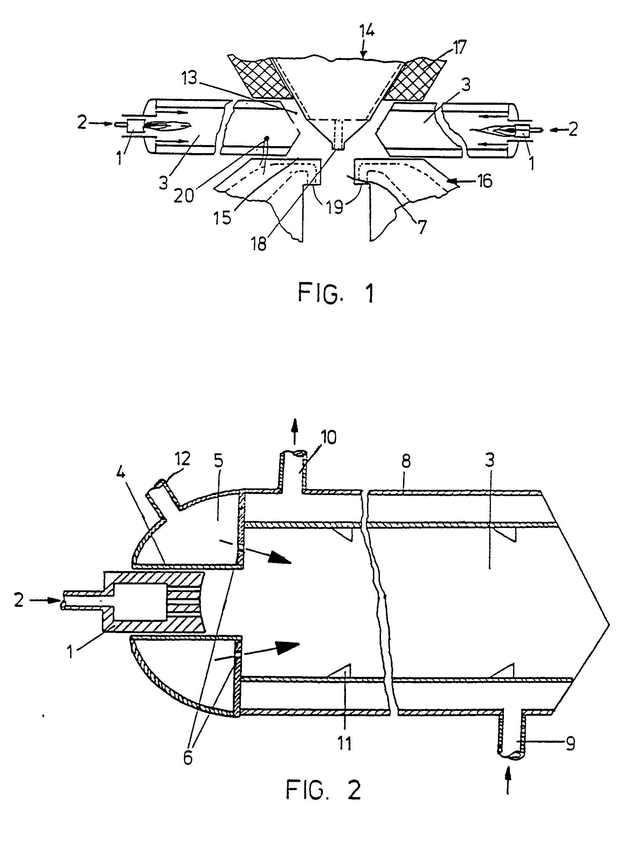

Gemäß Figur 1 wird mittels eines Flammenbrenners 1 ein stöchiometrisches Brenngas-/Luft- bzw. Brenngas/$O_2$-Gemisch 2 in einen Verbrennungsraum 3 geführt und bei einer Austrittsgeschwindigkeit aus der Brenndüse unterhalb der Flammenfortsetzungsgeschwindigkeit entzündet. Wie aus Figur 2 ersichtlich, ist die Brenndüse dicht in einem Kanal 4 geführt, der mit einer Luftverteilerkammer 5 zentrisch den Verbrennungsraum 3 brennerseitig abschließt. Etwa in Höhe der Brennerdüsenmündung befinden sich in der Wand zum Verbrennungsraum 3 in einem Abstand von 10 bis 30 mm Bohrungen 6, durch die Luft aus der Kammer 5 in einem Winkel von 0 bis 30° in Richtung auf den Flammenstrom geblasen wird. Der Vordruck in der Kammer 5 beträgt 1,1 bis 2,0 bar (absolut). Der Massenstrom der eingeblasenen Luft zuzüglich des Brenngases beträgt das 1,02 bis 1,2-fache des in Abhängigkeit von der gewünschten Temperatur und bei Schallgeschwindigkeit im Ziehdüseneinlauf 7 erforderlichen Massenstromes. Das Brenngas wird im ersten Bereich des Verbrennungsraumes 3 vollständig verbrannt und mit der eingeblasenen Luft gleichmäßig vermischt, so daß am Ende des Brennraumes bzw. Mischraumes 3 eine homogene Temperaturverteilung vorherrscht. Zu diesem Zweck besitzt der Mischraum 3 auf einer relativ großen Länge von 500 mm einen gleichbleibenden, runden Querschnitt. Der Mischraum 3 ist ferner mit einem Kühlmantel 8 versehen, der Kühlwasseranschlüsse 9 und 10 aufweist. Im Mischraum 3 können zusätzlich Strömungshindernisse 11 (Schikanen) zur besseren Durchmischung der durch die Bohrungen 6 eingespeisten Luft mit dem Brenngas eingebaut werden. Über den Stutzen 12 wird die zur Aufrechterhaltung eines konstanten Vordrucks in der Kammer 5 erforderliche Luft zugeführt.

Die Mischräume 3 münden in einen Raum 13 zwischen der Unterseite des Schmelzetiegels 14 und der Oberkante 15 der Ziehdüse 16. Die rohrförmigen Mischräume 3 schließen nahezu dicht mit diesen Bauteilen ab, so daß der Zwischenraum 13 ein quasi abgeschlossenes System bildet. Der Schmelzetiegel 14 ist an seiner Außenseite thermisch isoliert (17). Die an der Tiegelunterseite angeordneten Schmelzeaustrittsöffnungen 18 befinden sich zentral über dem Ziehdüseneinlauf 7. Das für die Zerfaserung notwendige Druckgefälle in der Ziehdüse 16 wird in bekannter Weise durch Treibstrahlen erzeugt (Treibstrahldüsen 19). Das Blasmedium besteht dabei ausschließlich aus dem aus den Mischräumen 3 austretenden Heißgas, das von der Ziehdüse 16 angesaugt wird.

Das Heißgas entsteht in den Mischräumen 3 durch Vermischung der durch den Verbrennungsprozeß erzeugten Abgase (Brenngase) mit der durch die Kammer 5 und die Bohrungen 6 eindosierten Luft. Am Ausgang der Brennräume 3 ist ein Temperaturfühler zur Regelung der Heißgastemperatur angeordnet. Als Stellgröße dient dabei der Massenstrom der zudosierten Luft und/oder die Brennerleistung, die über die Brennstoffzufuhr eingestellt wird. Ein Teil des Heißgases strömt auch die Unterseite des Schmelzeverteilers 14 an und verhindert eine Abkühlung der Schmelzetiegelunterseite (zusätzliche Heizquelle für den Schmelzeverteiler 14).

Die Strömungsgeschwindigkeit des Heißgases beträgt am Austritt der Mischräume 3 weniger als 50 m/sec (Vermischung bei atmosphärischem Druck) und nimmt dann aufgrund der konvergierenden Querschnittsform des Zwischenraumes 13 und der Ejektorwirkung der Ziehdüse 16 stetig bis auf Schallgeschwindigkeit im Bereich des Ziehdüseneinlaufs 7 zu. Durch die scharfkantige Strömungsführung und die kurze Länge des Ziehdüseneinlaufs von nur 2 bis 5 mm wird ein maximaler Druckgradient im Bereich der ersten Faserbildungszone unterhalb des Schmelzverteilers 14 erreicht. Bei einer Ruhetemperatur des Heißgases (gemessen mit dem Temperaturfühler 20) von z.B. 1000°C beträgt die Geschwindigkeit im Schallquerschnitt am Ziehdüseneinlauf 7 650 m/sec bei einer Temperatur von 787°C. Durch die Expansion in der Ziehdüse auf einen Druck von 0,3 bar wird dann die Geschwindigkeit auf 823 m/sec bei einer örtlichen Temperatur von 658°C erhöht. Im Ziehdüseneinlauf 7 erfolgt bereits die im Hinblick auf den Faserenddurchmesser maßgebliche Aufsplitterung bzw. Zerfaserung des Primärschmelzestromes. In dem anschließenden Bereich der Ziehdüse werden diese Einzelfäden dann noch weiter ausgezogen. Am austrittsseitigen Ende der Ziehdüse wird die Strömungsgeschwindigkeit durch einen nachgeschalteten Diffusor in bekannter Weise reduziert (siehe z.B. EP 38 989).

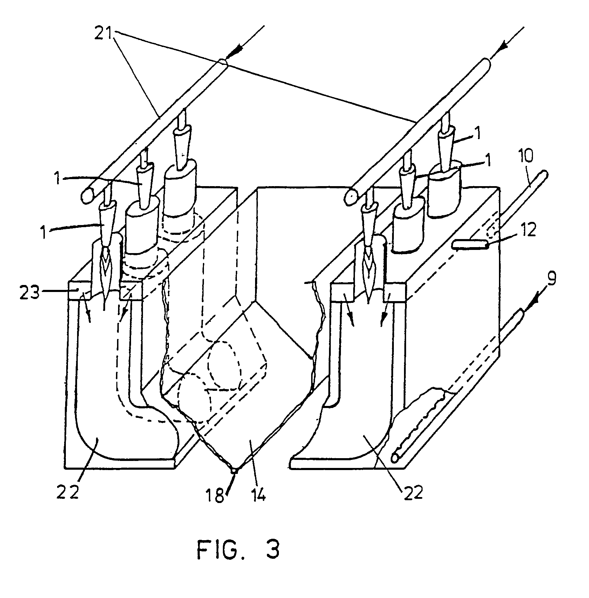

Gemäß Figur 3 sind die Brenner 1 parallel zu beiden Seiten des Schmelzverteilers 14 in vertikaler Richtung hintereinander angeordnet. Die Zuführung des Brenngases erfolgt durch Brenngasverteilerrohre 21. Der Mischraum 3 schließt sich zunächst ebenfalls vertikal an die Brenner 1 an und ist dann im unteren Teil um 90° abgewinkelt (22), so daß die Mischräume mit ihrer Austrittsöffnung wie bei der Ausführung nach Figur 1 auf die Außenflächen des Schmelzverteilers 14 gerichtet sind. Die Anschlüsse 9 und 10 für das Kühlwasser sind ähnlich wie bei der Ausführung nach Figur 1 bis 2 angebracht. Die Luftzuführung 12 ist mit einer Luftverteilerkammer 23 verbunden, die der Luftkammer 5 in Figur 2 entspricht.

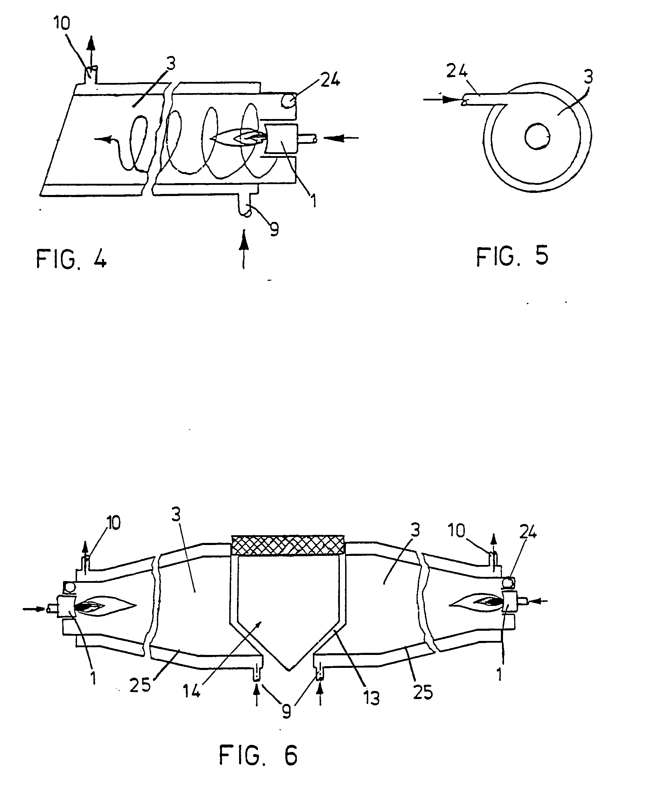

Gemäß einer in Figur 4 bis 5 dargestellten alternativen Ausführung erfolgt die Einspeisung der Luft durch eine tangentiale Zuführung 24 am Umfang des Mischraumes 3 in der Nähe des Brenners 1. Dadurch erreicht man eine gute Verwirbelung und Durchmischung mit den Brenngasen.

In Figur 6 ist eine wietere Ausführung der Brenn- bzw. Mischräume dargestellt. Der Querschnitt des Mischraumes 3 erweitert sich hier diffusorartig (25) mit einem Winkel von 5° bis 20°, vorzugsweise 5—10°, zur Austrittsseite hin bzw. zu dem Zwischenraum 13 hin. Auf diese Weise kann die Anströmgeschwindigkeit im Zwischenraum 13 reduziert werden. Die Einspeisung der Luft in den Mischraum 3 erfolgt wieder durch eine tangentiale Luftzuführung 24.

Beispiel

Bei Zuführung des Heißgases beidseitig der Ziehdüse 16 (siehe Figur 1) mit einer Austrittstemperatur aus den Mischräumen 3 von 1273 K beträgt die Schallgeschwindigkeit im engsten Querschnitt des Ziehdüseneinlaufes 7 651 m/sec bei einer Temperatur von 1061 K. Infolge der Ejektorwirkung der Treibstrahlen 19 der Ziehdüse 16 expandiert die Strömung auf einen Druck von 0,3 bar und wird ohne Vermischung über eine Länge von 50 mm konstant geführt. Dabei stellt sich eine Geschwindigkeit der Heißgasströmung von 863 m/sec bei einer Temperatur von 902 K ein. Unter diesen Bedingungen lassen sich feinste Glasfasern mit einem mittleren Faserdurchmesser von 0,3 µm herstellen. Aufgrund der völlig gleichmäßigen Temperaturverteilung im gesamten Faserbildungs- und Ausziehbereich werden Temperaturunterschiede im Bereich der primären Schmelzefäden vermieden und die Abkühlung der Fasern verlangsamt, so daß in Verbindung mit der hohen Strömungsgeschwindigkeit die Fasern stärker und gleichmäßiger ausgezogen werden. Messungen mit dem Rasterelektronenmikroskop ergaben eine Standardabweichung des mittleren Faserdurchmessers zwischen 0,15 und 0,2 µm mit einem Mittelwert von 0,3 µm. Aufgrund der definierten Strömungs- und Temperaturbedingungen beim Ausziehprozeß kann auch eine deutliche Verringerung des Anteils an nichtfaserigen Bestandteilen (Perlen, Dickstellen, Büschel etc.) erreicht werden.

**Patentansprüche**

1. Verfahren zur Herstellung von Mineralwollefasern, insbesondere Glasfasern mit einem Durchmesser von 0,1 µm bis 5 µm, vorzugsweise 0,1 bis 2 µm, nach dem Düsenblasverfahren, bei dem aus Schmelzeaustrittsöffnungen (18) im Boden eines Schmelzeverteilers (14) Schmelzeströme austreten, die in einer nachgeschalteten Ziehdüse (16) durch ein im wesentlichen parallel zu den Schmelzeströmen strömendes Blasmedium zerfasert werden, wobei das Blasmedium durch ein Druckgefälle in die Ziehdüse (16) eingesaugt und die Strömungsgeschwindigkeit in einem nachgeschalteten Diffusor reduziert wird, dadurch gekennzeichnet, daß als Blasmedium zwischen Verteilerunterseite und Zeihdüsenoberkante (15) von gegenüberliegenden Breitseiten des Schmelzeverteilers (14) ein aus Brenngasen und homogen zugemischter Luft bestehendes Heißgas mit einer Temperatur von 600°C bis 1,500°C im Überschuß zu dem gesamten, am Ziehdüseneinlauf (7) angesaugten Gasmengenstrom zugeführt wird und die Strömungsgeschwindigkeit des Heißgases im Bereich (13) zwischen der Ziehdüse (16) und dem Schmelzeverteiler (14) auf einen Wert <100 m/s eingestellt wird.

2. Verfahren nach Anspruch 1, dadurch gekennzeichnet, daß das Heißgas mit einer Temperatur von 800 bis 1,400°C zugeführt wird.

3. Verfahren nach Anspruch 1 bis 2, dadurch gekennzeichnet, daß die Strömungsgeschwindigkeit des Heißgases zwischen der Ziehdüse (16) und dem Schmelzeverteiler (14) auf einen Wert <50 m/s eingestellt wird.

4. Verfahren nach Anspruch 1 bis 3, dadurch gekennzeichnet, daß das Heißgas mit einem Überschuß von mindestens 1% und höchstens 20% des gesamten, durch die Ziehdüse (16) geförderten Gasmengenstromes zugeführt wird.

5. Verfahren nach Anspruch 4, dadurch gekennzeichnet, daß das Heißgas mit einem Überschuß von mindestens 1% und höchstens 10% des gesamten, durch die Ziehdüse (16) geförderten Gasmengenstromes zugeführt wird.

6. Verfahren nach Anspruch 1 bis 5, dadurch gekennzeichnet, daß die Temperatur des Heißgases am Ziehdüseneinlauf (7) gemessen wird und durch Nachstellung der Brenngas- und/oder Luftzufuhr selbsttätig geregelt wird.

7. Vorrichtung zur Herstellung von Mineralwollefasern gemäß dem Verfahren nach Anspruch 1, bestehend aus einem Schmelzeverteiler (14) mit Schmelzeaustrittsöffnungen (18), einer darunter angeordneten Ziehdüse (16), in der die aus dem Schmelzeverteiler (14) austretenden Primärschmelzefäden unter der Wirkung eines Heißgases zerfasert und ausgezogen werden, und Gasbrennern (1) zur Erzeugung des Heißgases im Bereich oberhalb der Ziehdüse (16) und unterhalb des Schmelzeverteilerbodens, dadurch gekennzeichnet, daß die Gasbrenner (1) mit ihren Brennräumen (3) seitlich zwischen dem Schmelzeverteiler (14) und der Ziehdüsenoberkante (15) angeordnet sind und die Brennräume (3) über Bohrungen (6) mit Luftkammern (5) verbunden sind, die unter einem Vordruck von 1,1 bis 2,0 bar (absolut) stehen.

8. Vorrichtung nach Anspruch 7, dadurch gekennzeichnet, daß die als Mischräume (3) für eine homogene Durchmischung der durch die Bohrungen (6) eingespeisten Luft mit den Brenngasen ausgebildeten Brennräume eine Länge von 100 bis 500 mm aufweisen.

9. Vorrichtung nach Anspruch 7 und 8, dadurch gekennzeichnet, daß der Zwischenraum (13) zwischen der Unterseite des Schmelzeverteilers (14) und der Ziehdüsenoberkante (15) einschließlich der Mischräume (3) ein quasi abgeschlossenes System bildet.

10. Vorrichtung nach Anspruch 7 bis 9, dadurch gekennzeichnet, daß die Bohrungen (6) zur Einspeisung der Luft unter einem Winkel von 0° bis 30° gegen die Brennerachse geneigt sind.

11. Vorrichtung nach Anspruch 7 bis 10, dadurch gekennzeichnet, daß die Einspeisung der Luft tangential (24) am Umfang des Mischraumes (3) erfolgt.

12. Vorrichtung nach Anspruch 7 bis 11, dadurch gekennzeichnet, daß die Mischräume (3) bogenförmig (22) um 90° abgewinkelt sind und das Heißgas zuerst vertikal und parallel zu den Schmelzeströmen eingespeist wird und danach aus dem abgewinkelten Teil die Unterseite des Schmelzeverteilers (14) im wesentlichen horizontal anströmt.

**Revendications**

1. Procédé de fabrication de fibres minérales, notamment de fibres de verre, d'un diamètre de 0,1—5 µm, de préférence de 0,1 µm jusqu'à 2 µm, selon le procédé du soufflage dans une tuyère dans lequel il sort par des ouverture (18) de sortie de la masse fondue prévues dans le fond d'un distributeur de masse fondue, des filets de masse fondue qui sont divisés en fibres, dans une tuyère d'étirage (16) placée en aval, par un milieu de soufflage qui s'écoule sensiblement parallèlement aux filets de masse fondue, le milieu de soufflage étant aspiré à travers la tuyère d'étirage par un gradient de pression, et la vitesse d'écoulement étant réduite dans un diffuseur placé en aval, caractérisé en ce qu'on achemine, comme milieu de soufflage, entre la face inférieure du distributeur et le bord supérieur (15) de la tuyère d'étirage, en provenance des grands côtés opposés du distributeur de masse fondue (14), un gaz chaud composé de gaz de combustion et d'air ajouté à ces gaz en mélange homogène, d'une température de 600°C à 1500°C, dans une quantité excédentaire par rapport au débit total de gaz aspiré à l'entrée (7) de la tuyère d'étirage et on règle la vitesse d'écoulement du gaz chaud, dans la région (13) comprise entre la tuyère d'étirage (16) et le distributeur de masse fondue (14), à une valeur <100 m/s.

2. Procédé selon la revendication 1, caractérisé en ce que le gaz chaud est acheminé à une température de 800 à 1400°C.

3. Procédé selon la revendication 1 ou 2, caractérisé en ce que la vitesse d'écoulement du gaz chaud entre la tuyère d'étirage (16) et le distributeur de masse fondue (14) est réglée sur une valeur <50 m/s.

4. Procédé selon les revendications 1 à 3, caractérisé en ce que le gaz chaud est acheminé avec un excédent d'au moins 1% au minimum et de 20% au maximum du débit total de gaz qui parcourt la tuyère d'étirage (16).

5. Procédé selon la revendication 4, caractérisé en ce que le gaz chaud est acheminé avec un excédent de 1% au minimum et de 10% au maximum du débit total de gaz qui parcourt la tuyère d'étirage (16).

6. Procédé selon les revendications 1 à 5, caractérisé en ce que la température du gaz chaud est mesurée à l'entrée (7) de la tuyère d'étirage et réglée automatiquement par correction de l'alimentation en gaz de combustion et/ou air.

7. Dispositif pour la fabrication de fibres de laine minérale par application du procédé selon la revendication 1, composé d'un distributeur de masse fondue (14) présentant des ouvertures (18) de sortie de la masse fondue, une tuyère d'étirage (16) disposée au-dessous, dans laquelle les fils primaires de masse fondue qui sortent du distributeur de masse fondue (14) sont divisés en fibres et étirés sous l'action d'un gaz chaud, et de brûleurs à gaz (1) servant à produire le gaz chaud dans la région qui surmonte la tuyère d'étirage (16) et situés au-dessous du fond du distributeur de masse fondue, caractérisé en ce que les brûleurs à gaz (1) sont disposés de façon que leurs chambres de combustion (3) soient situées latéralement entre le distributeur de masse fondue (14) et le bord supérieur (15) de la tuyère d'étirage, et les chambres de combustion (3) sont reliées par des perçages (6) à des chambres à air (5) qui sont sous une pression amont de 1,1 à 2,0 bar (pression absolue).

8. Dispositif selon la revendication 7, caractérisé en ce que les chambres de combustion, qui forment des chambres de mélange (3) pour assurer un brassage homogène de l'air introduit à travers les perçages (6) et les gaz de combustion, présentent une longueur de 10 à 500 mm.

9. Dispositif selon les revendications 7 et 8, caractérisé en ce que la chambre intermédiaire (13) forme un système quasi fermé entre la face inférieure du distributeur de masse fondue (14) et le bord supérieur (15) de la tuyère d'étirage, en combinaison avec les chambres de mélange (3).

10. Dispositif selon les revendications 7 à 9, caractérisé en ce que les perçages (6) servant à l'introduction de l'air sont inclinés d'un angle de 0 à 30° sur l'axe du brûleur.

11. Dispositif selon les revendications 7 à 10, caractérisé en ce que l'introduction d'air se produit tangentiellement (en 24) à la périphérie de la chambre de mélange (3).

12. Dispositif selon les revendications 7 à 11, caractérisé en ce que les chambres de mélange (3) sont coudées à 90°, en formant un coude (22), et que le gaz chaud est introduit tout d'abord verticalement et parallèlement aux courants de masse fondue et qu'ensuite, à la sortie de la partie coudée, il lèche sensiblement horizontalement la surface inférieure du distributeur de masse fondue (14).

**Claims**

1. Process for the production of mineral wool fibres, especially glass fibres with a diameter of 0.1 μm to 5 μm, preferably 0.1 to 2 μm, by blast drawing, in which from melt discharge orifices (18) in the bottom of a melt distributor (14) there issue melt streams which are reduced to fibres in a downstream drawing die (16) by a blast medium flowing essentially parallel to the melt streams, the blast medium being drawn in by a pressure gradient in the drawing die (16) and the flow velocity being reduced in a downstream diffuser, characterized in that a hot gas consisting of combustion gases and homogeneously admixed air at a temperature of 600 to 1,500°C is fed in as blast medium between the underside of the distributor and the drawing die upper surface (15) from opposite broad sides of the melt distributor (14) in excess of the whole gas flow drawn in at the drawing die inlet (7), and the flow velocity of the hot gas in the zone (13) between the drawing die (16) and the melt distributor (14) is adjusted to a value of less than 100 m/s.

2. Process according to claim 1, characterized in that the hot gas is fed at a temperature of 800 to 1400°C.

3. Process according to claims 1 to 2, characterized in that the flow velocity of the hot gas between the drawing die (16) and the melt distributor (14) is adjusted to a value of less than 50 m/s.

4. Process according to claims 1 to 3, characterized in that the hot gas is fed in an excess of at least 1% and at most 20% of the total gas flow delivered through the drawing die (16).

5. Process according to claim 4, characterized in that the hot gas is fed in an excess of at least 1% and at most 10% of the total gas flow delivered through the drawing die (16).

6. Process according to claims 1—5, characterized in that the temperature of the hot gas is measured at the drawing die inlet (7) and automatically controlled by adjustment of the delivery of combustible gas and/or air.

7. Apparatus for the production of mineral wool fibres according to the process according to claim 1, consisting of a melt distributor (14) with melt discharge orifices (18), a drawing die (16) disposed below it, in which by the action of a hot gas the primary melt threads issuing from the melt distributor (14) are reduced to fibres and drawn, and gas burners (1) for the production of the hot gas in the zone above the drawing die (16) and below the bottom of the melt distributor, characterized in that the gas burners (1) with their combustion chambers (3) are disposed laterally between the melt distributor (14) and the drawing die upper surface (15) and the combustion chambers (3) are connected via drilled holes (6) with air chambers (5), which are under a supply pressure of 1.1 to 2.0 bar (absolute).

8. Apparatus according to claim 7, characterized in that the combustion chambers, which are formed as mixing chambers (3) for the homogeneous thorough mixing of the air fed through the drilled holes (6) with the combustion gases, have a length of 100 to 500 mm.

9. Apparatus according to claims 7 and 8, characterized in that the interspace (13) between the underside of the melt distributor (14) and the drawing die upper surface (15) including the mixing chambers (3) forms a virtually closed system.

10. Apparatus according to claims 7 to 9, characterized in that the drilled holes (6) for feeding air are inclined at an angle of 0° to 30° to the burner axis.

11. Apparatus according to claims 7 to 10, characterized in that the air is fed tangentially (24) to the circumference of the mixing chamber (3).

12. Apparatus according to claims 7 to 11, characterized in that the mixing chambers (3) are bent in a curve (22) by 90° and that the hot gas is first fed vertically and parallel to the melt streams and subsequently flows essentially horizontally from the bent part onto the underside of the melt distributor (14).

FIG. 1

FIG. 2

1

FIG. 3

EP 0 279 286 B1

FIG. 4

FIG. 5

FIG. 6

3